# EUROPEAN PATENT APPLICATION

(11) **EP 4 280 168 A1**
(43) Date of publication of application: **22.11.2023**
(21) Application number: 22173641.6
(22) Date of filing: 16.05.2022
(51) Int. Cl.: G06T 19/20, G06T 17/00, G06T 7/00, B33Y 50/00

(54) **AUTOMATED METHODS FOR DESIGNING AND FABRICATING AN INTRA-ORAL APPLIANCE**

(71) Applicant: ETH Zürich, 8092 Zürich ETH-Zentrum (CH)
(72) Inventor: The designation of the inventor has not yet been filed
(74) Representative: Frei Patent Attorneys

(57) **Abstract**

The invention relates to the field of custom-made (this means individual, personalized) intra-oral appliances (plates), in particular intra-oral appliances for corrective treatment of cleft lip and/or cleft palate birth defect. The invention relates to a highly automated method for designing a custom-made intra-oral appliance and provides a highly automated method for providing a custom-made intra-oral appliance comprising a step (S1, S11) of obtaining a virtual 3D reconstruction (1, 1') of an oral cavity, a step (S6) of identifying an appliance region (8), an automated step (S7) of obtaining a 3D appliance mesh (9, 10) from the appliance region (8), and an automated step (S13) of processing the 3D appliance mesh for obtaining a volumetric appliance mesh (11, 12).

The invention provides further a method for obtaining a virtual 3D reconstruction of an oral cavity, the virtual 3D reconstruction being suitable for use in designing custom-made intra-oral appliances, and a method for designing an intra-oral appliance, wherein the obtained virtual 3D reconstruction is used in this method. The method for obtaining a virtual 3D reconstruction of an oral cavity comprises a step (S21) of obtaining at least one 2D image of an oral cavity, wherein the at least one image is acquired by a consumer electronics product, a step (S26) of transforming the obtained at least one 2D image into an initial virtual 3D reconstruction of the oral cavity, and a step (S29) of transferring information comprised in a further virtual 3D reconstruction, for example in a morphable model, to the initial virtual 3D reconstruction.

## Description

The invention relates to the field of custom-made (this means individual, personalized) intra-oral appliances, this means appliances, in particular appliances comprising or consisting of a plate, that are, during usage, arranged completely or at least predominantly in the oral cavity of the human or animal being for which the appliance is made. In particular, the invention relates to intra-oral appliances for corrective treatment of cleft lip and/or cleft palate birth defect. However, the invention may also be used for intra-oral appliances having another purpose, such as dental appliances or mouthguard (also called gumshield or protective covering).

The invention relates to a method for designing an intra-oral appliance of the above-mentioned kind, in particular for designing an intra-oral plate, and provides a method for providing an intra-oral appliance of the above-mentioned kind.

The invention provides further a method for obtaining an input needed for designing an intra-oral appliance of the above-mentioned kind, namely a method for obtaining a virtual 3D reconstruction of an oral cavity, and a method for designing an intra-oral appliance in which the obtained virtual 3D reconstruction is used.

The provided methods are in particular suitable for designing and/or providing intra-oral appliances that are passive appliances. This means that the appliances are not designed for providing a corrective force to any portion of the intra oral cavity. Rather, the designed and/or provided intra-oral appliances reproduce the actual intra-oral region, in particular the actual palate, alveolar ridge and, as the case may be, teeth, with high accuracy.

The invention adapts concepts of the field of computer graphics for their use in the field of custom-made intra-oral appliances, in particular for treating cleft lip and/or cleft palate. In particular, the invention adapts and further develops advanced computer graphics algorithms used in the field of image processing. Thereby, some of the most urgent issues in the field of custom-made intra-oral appliances can be addressed. In particular, the invention is advantageous over state-of-the-art methods for designing and/or providing intra-oral appliances, in particular intra-oral plates, in at least one of the following:
- The time needed to design and/or fabricate a custom-made appliance, in particular a custom-made plate.
- The degree of automatization of the method for designing and/or fabricating a custom-made appliance, in particular a custom-made plate.
- The reliability and robustness of the automated method for designing and/or fabricating a custom-made appliance, in particular a custom-made plate.
- The needed contribution of an expert, such as a practitioner (doctor, physician) and/or a dental technician.
- The impact of the method for designing and/or fabricating a custom-made appliance, in particular a custom-made plate, on the user. For example, state-of-the-art methods for providing an intra-oral appliance that comprise a step of making an impression of the oral cavity are disadvantageous in terms of user comfort and health risk.
- The needed medical instruments, in particular in terms of complexity and costs.
- The need for a specific method for acquiring input data.

As mentioned above, the invention is motivated by and in particular suitable for the field of intra-oral appliances for treating cleft lip and/or cleft palate, in particular passive intra-oral appliances for treating cleft lip and/or cleft palate.

The use of advanced computer graphics algorithms in the medical field, in particular in the field of prosthesis enjoys growing popularity. For example, A. A. Müller et al. disclose in "Missing facial parts computed by a morphable model and transferred directly to a polyamide laser-sintered prosthesis: an innovation study", British journal of oral and maxillofacial surgery, 49(8), e67-e71, a method for designing and fabricating a prosthesis of missing parts of a patient's face by using a morphable model of a healthy face and by matching a 3D scan of the patient's face with the morphable model. The morphable model was computed from 200 3D scans of healthy faces. The output of matching the 3D scan of the patient's face with the morphable model is a 3D reconstruction of a complete patient's face that is congruent with the healthy parts of the patient's face. The 3D reconstruction of the complete patient's face can then be used to derive a proposed shape of the prosthesis. The proposed shape can be considered as a good starting point for an expert, such as a maxillofacial prosthetic technician, to fabricate a well-fitting prosthesis. Besides the fact that methods as disclosed in this publication do not consider the particular conditions related to the intra-oral region, they are still time-consuming, still need a decisive contribution of an expert, and are still far from being automated.

Although there have been recently considerable efforts in simplifying, automating and reducing time need for designing and fabricating custom-made intra-oral plates, in particular intra-oral plates for the treatment of cleft lip and/or palate, state-of-the-art methods do seldom use advanced computer graphics algorithms. Further, state-of-the-art methods rely usually on digitalized 3D impressions of the intra-oral cavity or on expensive 3D scans of the intra-oral cavity and on essential user input.

For example, J. Schiebl et al. discloses in "RapidNAM: Algorithm for the Semi-Automated Generation of Nasoalveolar Molding Device Design for Presurgical Treatment of Bilateral Cleft Lip and Palate", IEEE Transactions on Biomedical Engineering, Vol 67, No. 5, 2020, an algorithm that is configured to generate in a semi-automated manner a Nasoalveolar molding (NAM) device design series from a maxilla model and a set of input parameters. The maxilla model is generated from an impression of the maxilla of a neonate with bilateral cleft lip and palate, said impression being digitized using a 3-dimensional triangulation scanner. The NAM device design series can be used in treating the neonate by reducing the cleft by using the devices of the device design series in a consecutive manner, wherein each device of the device design series applies a force to the patient's intra-oral region, said force being generated by a tight fit of the devices to the neonate's jaw. The algorithm is configured to identify different anatomic regions in the maxilla model, in particular the three segments of the alveolar ridge, and to generate two separate meshes for the premaxilla and the alveolar segments by considering height information, distances between neighboring ridge points and information about the mesh's surface perpendiculars comprised in the maxilla model. The segments of the alveolar ridges comprised in the mesh of the alveolar ridge are then bridged by fitting a two-dimensional ellipse to alveolar ridge points identified in the maxilla model and arranging a series of polynomials of degree 12 along the ellipse and in regions where no segments of the alveolar ridge has been identified in the maxilla model. The resulting mesh of the "healthy" alveolar ridge is then used to generate a first NAM plate design, wherein the generation comprises thickening, bulging the palatal plate area, remeshing and smoothening. In a further step, growth rates are considered to generate the series of device designs.

WO 2009/111310 A2 is an example of state-of-the-art teaching that uses computer-aided design and/or computer-aided manufacturing (CAD/CAM) for providing an intra-oral appliance, but that has neither a high degree of automatization nor uses any advanced computer graphics algorithms.

WO 2009/111310 A2 discloses the use of computer-aided modeling to assist in the creation of a series of corrective appliances to reposition the segments of a cleft palate. According to an embodiment, a three-dimensional digital model that represents the initial shape of the palate is obtained and said digital model is edited by a health care provider to create a digital model of a final shape of the palate. A digital model of at least one intermediate shape of the palate is then created by interpolating between the initial shape and the final shape, for example by using a three-dimensional graphical rendering program. Finally, digital models of corrective appliances adapted to engage the initial, the final and the intermediate shape(s) are created in a computer-aided manner and corresponding appliances are fabricated.

More recent publications make use of intra-oral scanners for generating a virtual representation of the intra-oral region and use the virtual representation for designing and manufacturing, using additive and/or subtractive manufacturing methods, palatal plates within a digital workflow. However, there is still need for a decisive contribution of an expert, both during designing supported by a computer program and during postprocessing of the manufactured plate. In particular, it is the expert that designs the plate from the digital model in a step-by-step workflow using a Graphical User Interface, wherein some steps are needed to correct discrepancies that arise from the manner the virtual representation is generated from the images acquired by the intraoral scanner. In other words, the degree of design automatization is still low and no concepts of computer graphics are used to support the expert. A. B. Xepapadeas et al., "Technical note on introducing a digital workflow for newborns with craniofacial anomalies based on intraoral scans - part I: 3D printed and milled palatal stimulation plate for trisomy 21, BMC Oral Health, 2020, is an example of such a more recent publication.

It is an object of the invention to provide methods that overcome at least some of the drawback of methods according to the state-of-the-art.

In particular, it is an object of the invention to provide a method for designing a custom-made intra-oral appliance for later manufacturing. In other words, the method for designing is an important part of a method for providing a custom-made intra-oral appliance and it is an object of the invention to provide a method for providing a custom-made intra-oral appliance.

In particular, it is an object of the invention to provide a method that is suitable for designing and/or providing a custom-made intra-oral appliance, the method having a high degree of automatization. The high degree of automatization may result in at least one of a decrease of the time needed to design and/or provide the appliance, a decrease in expert knowledge needed for designing and/or providing the appliance, and a decrease in user impact for designing and/or providing the appliance, for example a decrease in health risk and/or an increase in user comfort. Further, the provided method may omit the need to use expensive instruments and/or a specific instrument for designing and/or providing a custom-made intra-oral appliance.

In particular, it is an object of the invention to provide a method for designing and/or providing a custom-made, intra-oral appliance for treatment of cleft lip and/or cleft palate, in particular a custom-made, passive, intra-oral appliance for treatment of cleft lip and/or cleft palate. The method may have a high degree of automatization and the advantages mentioned above.

It is a further object of the invention to provide a method for obtaining a virtual 3D reconstruction of an oral cavity that is suitable for use in designing an intra-oral appliance, this means a method for obtaining an input that is essential in the method for providing a custom-made intra-oral appliance, and the related method of designing.

In particular, it is an object of the invention to provide a method, in particular a highly automated method, for obtaining a virtual 3D reconstruction of an oral cavity that does not need expensive specialized instruments or expert knowledge and that has nearly no health risk.

The disclosed methods are computer-implemented methods or computer-supported methods, at least. Therefore, it is a further object of the invention to provide related computer programs, related computer readable mediums, related computer-readable signals, and related data carrier signals.

At least one of these objects is achieved by methods and installations according to the claims.

The following terms have the following meaning in this application if not stated explicitly otherwise:
A (virtual or non-virtual, this means physical) object, such as a reconstruction of an oral cavity or a mesh, is 3D if it comprises height/depth information ("height" is used in the following, only) by extending in 3D space. In contrast to this, an image of an object, the image being acquired by a state-of-the-art consumer electronics product, such as a mobile camera, does usually not comprise height information of the object by the object extending in 3D space. In other words, the image is a 2D representation of the object, wherein some kind of height information of the object may be given by shades, sizes etc.

A (virtual or non-virtual, this means physical) object, such as an appliance mesh, is volumetric if it has or defines a wall strength. For example, a surface as such is not volumetric. However, an object that comprises a surface and that extends perpendicular to the surface is volumetric.

"Automated" means fully automated if not stated otherwise. This means, for example, that an automated step does not need any input from a user during execution of the step. The start and/or end of the step may be caused by a user. However, the automated steps disclosed below usually start and end in an automated manner, too. In particular, they are started automatically by a preceding step that may be automated or not and they end automatically, for example after providing an output.

"Transferring information" does not only cover one-to-one transfer of information, such as attributing the anatomic meaning of vertices of a mesh in which the vertices are labelled according to their anatomic meaning to a mesh in which the vertices are not labelled according to their anatomic meaning. Rather, "transferring information" does also cover cases in which a mesh or point cloud is amended, this means adjusted, deformed, corrected etc., based on another mesh or point cloud. For example, a gap in the intra-oral cavity, such as a cleft in the alveolar ridge, the gap being present in a first mesh but not in a second mesh, may be bridged in the first mesh during registering the first mesh and second mesh. In other words, the information of the gap-free oral cavity comprised in the second mesh is used to amend the first mesh. This kind of using information present in a mesh (the second mesh in the example) for amending another mesh (the first mesh in the example) is also considered as "transferring information", in the following.

The method that is suitable for providing a custom-made intra-oral appliance is computer implemented and comprises the following steps:
- A step of obtaining a virtual 3D reconstruction of an oral cavity, in particular of the palate, the alveolar ridge and, as the case may be, the teeth.
   The oral cavity is the oral cavity of the human or animal being for which the appliance is custom-made.
   The virtual 3D reconstruction may be considered as a virtual model of the oral cavity.
   The virtual 3D reconstruction may be considered as a plurality of points in 3D space, wherein the points reproduce the surface of the oral cavity.
   In an embodiment, the step of obtaining a virtual 3D reconstruction of an oral cavity comprises obtaining a virtual 3D reconstruction of an oral cavity comprising a cleft palate.
   In an embodiment, the step of obtaining a virtual 3D reconstruction of an oral cavity comprises obtaining a virtual 3D reconstruction of an oral cavity of a neonate, in particular of a neonate suffering a cleft palate.
   The virtual 3D reconstruction may be obtained by any embodiment of the method for obtaining a virtual 3D reconstruction of an oral cavity disclosed below.
   In particular, the step of obtaining a virtual 3D reconstruction of an oral cavity may comprise a step of obtaining a 2D image, in particular a plurality of 2D images, of the oral cavity, wherein the image is or images are acquired by a consumer electronics product.
   In addition, the step of obtaining a 2D image may comprise at least one of:
      ∘ A step of obtaining a 2D video, this means a sequence of a plurality of 2D images (frames), wherein obtaining the 2D video comprises capturing the oral cavity from a continuous range of angles and with a fluid, round movement of the consumer electronics product.
         The step of obtaining a 2D video may take a few seconds but less than one minute, in particular between 5 and 45 seconds or between 10 and 35 seconds.
         The time needed for obtaining the 2D video depends on the frame rate of the camera used and of the number of angles for which an image (frame) of good quality is needed. It is advantageous if the number of angles for which an image (frame) is available is larger than 100, for example between 100 and 200.
      ∘ The use of a mirror, in particular a dental mirror.
         In particular in embodiments in which a mirror is used, the step of obtaining a 2D image may be carried out without introducing the consumer electronics product or a portion thereof into the intra-oral cavity.
   Alternatively or in addition, the step of obtaining a virtual 3D reconstruction of an oral cavity may use approaches used in photogrammetry for generating a virtual 3D reconstruction of the oral cavity from at least one 2D image.
   For example, the step of obtaining a virtual 3D reconstruction of an oral cavity may use a photogrammetric program configured for sparse and dense reconstruction transforming at least one 2D image into a 3D point cloud.
   Alternatively to the step of obtaining a 2D image of the oral cavity and/or to use approaches used in photogrammetry, the step of obtaining a virtual 3D reconstruction of an oral cavity may comprise a step of making an impression of the oral cavity.
   Alternatively to the step of obtaining 2D image of the oral cavity and/or to use approaches used in photogrammetry or the step of making an impression of the oral cavity, the step of obtaining a virtual 3D reconstruction of an oral cavity may comprise using an intra-oral scanner, this means a step of making directly a 3D scan of the oral cavity.
- A step of identifying an appliance region.
   Usually, the appliance region is identified in the virtual 3D reconstruction or a processed version thereof, for example the processed virtual 3D reconstruction that results from the step of processing the virtual 3D reconstruction for obtaining a processed virtual 3D reconstruction, this step being described in detail further below, and/or the processed virtual 3D reconstruction that results from the step of processing the virtual 3D reconstruction for generating a cleft-free 3D appliance mesh.
   The appliance region is the region of the intra-oral cavity that is or needs to be covered by the appliance, in particular by a plate of the appliance, during use of the appliance.
   The appliance region may be considered to be a selection of the plurality of points in 3D space that reproduce the surface of the oral cavity, wherein the selection represents the region of the oral cavity that is or needs to be covered by the appliance, in particular by a plate of the appliance, during use of the appliance.
- An automated step of obtaining a 3D appliance mesh from the appliance region.
   In other words, the (processed as the case may be) virtual 3D reconstruction is transformed in a 3D appliance mesh.
   The 3D appliance mesh is usually a virtual mesh in 3D space, wherein the mesh reproduces the appliance region.
   In an embodiment, the 3D appliance mesh represents the surface of the (processed as the case may be) virtual 3D reconstruction of the oral cavity in the appliance region. In other words, the 3D appliance mesh may be the above-mentioned selection or a copy thereof.
   The virtual 3D reconstruction of an oral cavity obtained in the step of obtaining a virtual 3D reconstruction may be processed prior to the automated step of obtaining from the appliance region a 3D appliance mesh, as will be disclosed below. In this case, the 3D appliance mesh is obtained from the processed virtual 3D reconstruction of the oral cavity.
- An automated step of processing the 3D appliance mesh for obtaining a volumetric appliance mesh.
   In particular, the automated step of processing the 3D appliance mesh for obtaining a volumetric appliance mesh may comprise an automated step of thickening the 3D appliance mesh.
   The thickening may be a non-uniform thickening. For example, the edge regions, in particular regions that are close to the user's cheeks during use of the appliance, may be thinner than other regions of the appliance. Alternatively or in addition, regions that are exposed to increased mechanical stress during use of the appliance, and/or regions that are important and/or designed for good hold of the appliance in the oral cavity during use of the appliance, may be thicker than other regions of the appliance.
   In an embodiment, the 3D appliance mesh is thickened to 0.5 to 5 mm, in particular to 1 to 3 mm.
   For example, the 3D appliance mesh is thickened to approximately 2 mm, for example to 1.8 to 2.2 mm. However, some specific regions, such as edge regions, regions exposed to increased mechanical stress and/or regions that are important for good hold, may have a thickness that is different from approximately 2 mm.
   The step of thickening may comprise a step of offsetting vertices of the 3D appliance mesh along their corresponding normal, for example.
   Alternatively or in addition to comprising the automated step of thickening the 3D appliance mesh, at least one of the following may apply in the automated step of processing the 3D appliance mesh for obtaining a volumetric appliance mesh:
      - The automated step of processing the 3D appliance mesh for obtaining a volumetric appliance mesh may comprise an automated step of smoothing a boundary of the 3D appliance mesh.
         The automated step of smoothing may comprise at least one of boundary neighbor smoothing, Laplacian smoothing, for example selective Laplacian smoothing, for example.
      - The volumetric appliance mesh obtained in the automated step of processing the 3D appliance mesh for obtaining a volumetric appliance mesh may be an initial volumetric appliance mesh that is processed before providing any volumetric appliance mesh to a user or to another step of the method.
         For example, the automated step of processing the 3D appliance mesh for obtaining a volumetric appliance mesh may comprise an automated step of smoothing an initial volumetric appliance mesh.

In an embodiment and independent of the concrete realization of the above-mentioned steps of the method, the method provides, to a user, the opportunity to influence the design of the appliance provided by the method. The opportunity may be provided via a graphical user interface (GUI).

In particular, at least one of the following may apply:
- The method may comprise a step of post-processing the 3D appliance mesh, wherein the step of post-processing the 3D appliance mesh comprises providing to a user a possibility to post-process the 3D appliance mesh, for example to add at least one of a surface structure, a hole and/or a bore, and/or to adjust, in particular slightly adjust, the 3D appliance mesh.
   The step of post-processing the 3D appliance mesh may be automated except a user input selecting the kind of post-processing to be carried out. The post-processing, this means, for example, adding a surface structure, a hole and/or a bore, and/or an adjustment of the 3D appliance mesh, may then be carried out in an automated manner.
   The user input may be made via the GUI comprising or presenting selecting tools.
   In an embodiment, the 3D appliance mesh obtained in the automated step of obtaining from the appliance region a 3D appliance mesh may be presented on the GUI and the GUI may provide tools that allows the user to specify parameters of the step of post-processing the 3D appliance mesh. For example, the tools may be configured to allow the user to configure, for example to position and/or dimension, a surface structure, a hole and/or a bore, and/or to define an adjustment and/or a region to be adjusted.
   Usually, the step of post-processing the 3D appliance mesh is carried out subsequent to the automated step of obtaining from the appliance region a 3D appliance mesh and prior to the automated step of processing the 3D appliance mesh for obtaining a volumetric appliance mesh.
- The volumetric appliance mesh obtained by the automated step of processing the 3D appliance mesh is a proposed volumetric appliance mesh and the method comprises a step of post-processing the proposed volumetric appliance mesh for obtaining a volumetric appliance mesh, wherein the step of post-processing the proposed volumetric appliance mesh comprises providing to a user a possibility to post-process the proposed volumetric appliance mesh, for example to add at least one of a surface structure, a hole and/or a bore, and/or to adjust, in particular slightly adjust, the proposed volumetric appliance mesh, for example to adjust a thickness.
   The step of post-processing the proposed volumetric appliance mesh may be automated except a user input selecting the kind of post-processing to be carried out. The post-processing, this means, for example, adding a surface structure, a hole and/or a bore, and/or an adjustment of the proposed volumetric appliance mesh may then be carried out in an automated manner.
   The user input may be made via the GUI comprising or presenting selecting tools.
   In an embodiment, the proposed volumetric appliance mesh, this means the appliance mesh obtained in the automated step of processing the 3D appliance mesh or, as the case may be, the 3D appliance mesh obtained in the step of post-processing the 3D appliance mesh for obtaining a volumetric appliance mesh may be presented on the GUI and the GUI may provide tools that allows the user to specify parameters of the step of post-processing the proposed volumetric appliance mesh. For example, the tools may be configured to allow the user to configure, for example to position and/or dimension, a surface structure, a hole, a bore and/or to define an adjustment and/or a region to be adjusted.
   The thickness may be post-processed locally, only. For example, the thickness may be post-processed locally for increasing at least one of the stability of the appliance, good hold of the appliance in the oral cavity during use of the appliance, and comfort during use of the appliance.

The surface structure may be a wavy structure that approximates or reproduces the rugae, this means the wrinkles, of a healthy palate tissue.

The hole may be a ventilation hole for preventing suffocating in case the appliance is swallowed accidentally.

Usually, and independent of the concrete realization of the method for providing a custom-made intra-oral appliance and of its steps, the method comprises a step of manufacturing an appliance, wherein the appliance is manufactured according to an appliance mesh generated by the method for providing a custom-made intra-oral appliance according to any embodiment disclosed. In particular, the appliance is manufactured according to the volumetric appliance mesh, this means according to the volumetric appliance mesh obtained in the automated step of processing the 3D appliance mesh for obtaining a volumetric appliance mesh or, as the case may be, according to the processed initial volumetric appliance mesh or, as the case may be, according to the post-processed proposed volumetric appliance mesh.

The step of manufacturing an appliance may comprise direct additive manufacturing, for example 3D printing.

The method may comprise a step, in particular an automated step, of providing the volumetric appliance mesh generated by the method according to any embodiment disclosed. In particular, the volumetric appliance mesh obtained in the automated step of processing the 3D appliance mesh for obtaining a volumetric appliance mesh or, as the case may be, the processed initial volumetric appliance mesh or, as the case may be, the post-processed proposed volumetric appliance mesh may be provided to the step of manufacturing an appliance.

The volumetric appliance mesh may be provided in a format supported by software of computer-assisted manufacturing.

In other words, the method, according to any embodiment disclosed, may comprise a step, in particular an automated step, of providing a volumetric appliance mesh generated by the method according to any embodiment disclosed in a format supported by software of computer-assisted manufacturing.

The computer-assisted manufacturing may comprise direct additive manufacturing technology, for example 3D printing.

Usually, a method comprising the step of providing a volumetric appliance mesh in a format supported by software of computer-assisted manufacturing comprises further a step, in particular an automated step, of computer-assisted manufacturing an appliance according to the volumetric appliance mesh provided in a format supported by software of computer-assisted manufacturing

In embodiments in which the step of obtaining a virtual 3D reconstruction of an oral cavity comprises obtaining a virtual 3D reconstruction of an oral cavity comprising a cleft palate, the method may comprise further at least one of a step of processing the virtual 3D reconstruction of the oral cavity comprising a cleft palate and a step of processing the 3D appliance mesh for generating a cleft-free 3D appliance mesh, in particular a 3D appliance mesh comprising a palate area and an alveolar ridge area, wherein neither the palate area nor the alveolar ridge area comprise a cleft.

The step of processing the virtual 3D reconstruction or, as the case may be, the step of processing the 3D appliance mesh may comprise approximating vertices representing the cleft palate to the surface of an ellipsoid, in particular to the surface of a sphere. Thereby, the 3D appliance mesh can be made cleft-free in the palate area in an indirect manner (i.e. by processing the virtual 3D reconstruction of the oral cavity) or in a direct manner (i.e. by processing the 3D appliance mesh).

In embodiments, the step of processing the virtual 3D reconstruction or, as the case may be, the step of processing the 3D appliance mesh comprises further bridging an alveolar ridge area of the virtual 3D reconstruction or, as the case may be, of the 3D appliance mesh. Thereby, the 3D appliance mesh can be made cleft-free in the alveolar ridge area in an indirect manner (i.e. by processing the virtual 3D reconstruction of the oral cavity) or in a direct manner (i.e. by processing the 3D appliance mesh).

For example, the method may comprise the step of processing the virtual 3D reconstruction of an oral cavity for generating a cleft-free 3D appliance mesh, wherein the step of processing the virtual 3D reconstruction comprises a step of bridging, in the virtual 3D reconstruction, a cleft in the alveolar ridge area of the virtual 3D reconstruction.

For example, the step of bridging a cleft in the alveolar ridge area may be according to any embodiment disclosed below with respect to a step of transferring information. In particular, the step of bridging a cleft in the alveolar ridge area of the virtual 3D reconstruction of an oral cavity may comprise a step of providing a further virtual 3D reconstruction of a further oral cavity and a step of transferring information comprised in the further virtual 3D reconstruction of a further oral cavity to the virtual 3D reconstruction of the oral cavity comprising a cleft palate.

As mentioned above and as follows from the discussion of the steps and optional steps of the method, the method has a high degree of automatization. Therefore, according to embodiments of the method, at least one of the following may apply:
- The step of obtaining a virtual 3D reconstruction is an automated step with the exception of a step of acquiring image data of the oral cavity and with the exception of an optional step of indicating points that are characteristic points of the oral cavity in embodiments in which the optional step of indicating points that are characteristic points of the oral cavity is non-automated or non-fully automated.
   The step of acquiring image data of the oral cavity may comprise any non-automated or non-fully automated action disclosed with respect to the method for obtaining a virtual 3D reconstruction of an oral cavity. In particular, the step of acquiring image data of the oral cavity may comprise the non-automated action of acquiring at least one 2D images of the oral cavity, of making an impression of the oral cavity and of scanning it, or of using an intra-oral scanner.
   The optional step of indicating points that are characteristic points of the oral cavity is also called "landmarking" in literature.
   In embodiments, the optional step of indicating points that are characteristic points of the oral cavity may be non-automated because a user has to indicate the characteristic points manually, in particular via a graphical user interface (GUI) and on image data of the oral cavity presented on the GIU.
   In embodiments, the optional step of indicating points that are characteristic points of the oral cavity may be automated, for example by using a model of an Artificial Intelligence (AI), wherein the model is trained to localize the characteristic points on image data of the oral cavity.
   In embodiments in which the image data on which the model of the AI localizes or the user indicates the characteristic points are the virtual 3D reconstruction of an oral cavity obtained in the step of obtaining a virtual 3D reconstruction of an oral cavity, the optional step of indicating points may be considered as a step subsequent to the step of obtaining a virtual 3D reconstruction of an oral cavity.
- The step of identifying, in particular in the virtual 3D reconstruction or a processed version thereof, an appliance region is an automated step with the exception of an optional step of indicating points that are characteristic points of the oral cavity in embodiments in which the optional step of indicating points that are characteristic points of the oral cavity is non-automated or non-fully automated.
   In embodiments, the optional step of indicating points that are characteristic points of the oral cavity may be non-automated because a user has to indicate the characteristic points manually, in particular via a graphical user interface (GUI) and on image data of the oral cavity presented on the GUI.
   In embodiments, the optional step of indicating points that are characteristic points of the oral cavity may be automated, for example by using a model of an Artificial Intelligence (AI), wherein the model is trained to localize the characteristic points on image data of the oral cavity.
   In an embodiment, the image data on which the model of the AI localizes or the user indicates the characteristic points are the virtual 3D reconstruction of an oral cavity obtained in the step of obtaining a virtual 3D reconstruction of an oral cavity.

In an embodiment, the method comprises:
- A step of providing a further virtual 3D reconstruction of a further oral cavity.
   The further oral cavity is not the cavity for which a virtual 3D reconstruction is obtained in the step of obtaining a virtual 3D reconstruction of an oral cavity.
   The further virtual 3D reconstruction may comprise detailed information about the further oral cavity. Therefore, the further virtual 3D reconstruction may be suitable and used to increase the completeness of the virtual 3D reconstruction obtained in the step of obtaining a virtual 3D reconstruction of an oral cavity, to increase the accuracy of the virtual 3D reconstruction, and/or for segmentation, this means localisation and labelling of different areas, of the virtual 3D reconstruction, for example. The corresponding processing of the virtual 3D reconstruction may base on registering at least a portion of the further virtual 3D reconstruction or a template mesh thereof and the virtual 3D reconstruction. The corresponding processing of the virtual 3D reconstruction may be considered to comprise a transfer of information from the further virtual 3D reconstruction or a template mesh thereof to the virtual 3D reconstruction.
   For example, the further virtual 3D reconstruction or a template mesh thereof may be suitable and used to reduce noise in the virtual 3D reconstruction and to fill holes, in particular missing mesh portions. In addition or alternatively, the further virtual 3D reconstruction or a template mesh thereof may be suitable and used for segmentation of the virtual 3D reconstruction (or a processed version thereof, as the case may be).
   The further virtual 3D reconstruction may be a statistical representation, for example an average, of a plurality of oral cavities. In other words, the further oral cavity may be a statistical representation, for example an average, of a plurality of oral cavities.
   For example, the statistical representation of a plurality of oral cavities may comprise a morphable model constructed from the pluralities of oral cavities.
   The further virtual 3D reconstruction may comprise a template mesh.
   The template mesh may represent an average oral cavity of a plurality of oral cavities in the case of the further virtual 3D reconstruction being a statistical representation of a plurality of oral cavities.
   Alternatively to the further virtual 3D reconstruction being a virtual 3D reconstruction of at least one oral cavity of a human or animal being that is or was alive, the further virtual 3D reconstruction may be a virtual 3D reconstruction designed manually and/or the further oral cavity may be an oral cavity designed manually.
   The further virtual 3D reconstruction and/or the further oral cavity may be designed manually by a dental technician, for example.
   The further virtual 3D reconstruction and/or the further oral cavity may be designed manually by using a GUI and/or modelling software, for example.
- A step of processing the virtual 3D reconstruction obtained in the step of obtaining a virtual 3D reconstruction of an oral cavity for obtaining a processed virtual 3D reconstruction of the oral cavity, wherein the step of processing the virtual 3D reconstruction comprises a step, in particular an automated step, of transferring information comprised in the further virtual 3D reconstruction to the virtual 3D reconstruction.
   For example, at least one of the following information may be transferred from the further virtual 3D reconstruction to the virtual 3D reconstruction:
   - The anatomic meaning of a vertex, this means information needed to segment the virtual 3D reconstruction. In particular information for identifying at least one of the following areas may be transferred:
      ∘ An area comprising the palate (the cleft palate, as the case may be), but not other regions of the oral cavity, such as the alveolar ridge or teeth. This area is called "palate area" in this text.
      ∘ An area comprising the alveolar ridge (the alveolar segments in the case of a cleft alveolar ridge), but not other regions of the oral cavity, such as the palate or teeth. This area is called "alveolar ridge area" in this text.
      ∘ An area comprising the teeth, but not other regions of the oral cavity, such as the palate or the alveolar ridge. This area is called "teeth area" in this text.
      ∘ An area comprising a gap that needs to be bridged, but not other regions of the oral cavity, such as the palate, the alveolar ridge (or the alveolar segments in the case of a cleft alveolar ridge) or teeth. This area is called "bridge area" in this text.
      The gap may be a cleft, in particular a cleft in the alveolar ridge (called "alveolar ridge bridge area"), in case the virtual 3D reconstruction is a virtual 3D reconstruction of an oral cavity comprising a cleft palate. The gap may be a gap between teeth in case the method aims for providing a custom-made mouthguard or a custom-made dental appliance.
   - The appliance region.
      The appliance region may be labelled in the further virtual 3D reconstruction.
      Alternatively, the appliance region may be labelled in the further virtual 3D reconstruction in an indirect manner. For example, the appliance region may be considered to correspond to the palate area, the alveolar ridge area or, as the case may be, the teeth area, and the bridge area.
      Therefore, the automated step of identifying, in particular in the virtual 3D reconstruction or a processed version thereof, an appliance region may comprise transferring the appliance region labelled in a direct or indirect manner in the further virtual 3D reconstruction to the (processed, as the case may be) virtual 3D reconstruction.
   - Information indicating a target state of the oral cavity represented by the virtual 3D reconstruction of an oral cavity.
      In particular, information concerning a healthy oral cavity, for example a healthy alveolar ridge in the case the virtual 3D reconstruction is a virtual 3D reconstruction of an oral cavity comprising a cleft palate, may be transferred from the further virtual 3D reconstruction to the virtual 3D reconstruction.
   - Information that contributes to the above-mentioned increase in completeness and/or accuracy.

In an embodiment, the further virtual 3D reconstruction or a template mesh thereof is labelled, for example by a provider of the further virtual 3D reconstruction or the template mesh thereof, for being suitable to comprise the information needed to segment the virtual 3D reconstruction.

In particular, at least one of an anatomic area, for example at least one of the above-mentioned areas, and the appliance region may be labelled in the further virtual 3D reconstruction.

In an embodiment of the method comprising a step of providing a further virtual 3D reconstruction of a further oral cavity and a step of processing the virtual 3D reconstruction, the step of processing the virtual 3D reconstruction comprising a step of transferring information comprised in the further virtual 3D reconstruction to the virtual 3D reconstruction, the method, in particular the step of processing the virtual 3D reconstruction, comprises at least one of:
- A step of bridging, in the virtual 3D reconstruction, a gap in the oral cavity represented by the virtual 3D reconstruction.
   The step of bridging may be carried out after identifying a bridging area, for example by transferring information comprised in the further virtual 3D reconstruction to the virtual 3D reconstruction.
   The gap may be, for example, a cleft or a gap between teeth, as indicated above.
- A step of registering at least a portion of the further virtual 3D reconstruction or a template mesh thereof and the virtual 3D reconstruction.
   The step of registering may comprise a step of bringing the virtual 3D reconstruction and the further virtual 3D reconstruction or a template mesh thereof in dense correspondence.
   The step of registering may comprise a step of indicating, in the virtual 3D reconstruction, points that are characteristic points of the oral cavity, in particular a step of indicating according to any embodiment disclosed above.
   The step of indicating is usually carried out prior to the step of bringing in dense correspondence.
   Bringing a first virtual mesh, such as the virtual 3D reconstruction, and a second virtual mesh, such as the further virtual 3D reconstruction or a template mesh thereof, in dense correspondence means that the first and/or second mesh are re-parameterised into a consistent form in which the number of vertices and the anatomical meaning of each vertex are made consistent across the first and second meshes.
   As mentioned above, the further virtual 3D reconstruction may be a reconstruction comprising detailed information about the further oral cavity and the further virtual 3D reconstruction may be used to increase the completeness and/or accuracy of the virtual 3D reconstruction obtained in the step of obtaining a virtual 3D reconstruction of an oral cavity and/or to segment the virtual 3D reconstruction.
   The increase in completeness and/or accuracy may be done in the step of registering the further virtual 3D reconstruction or a template mesh thereof and the virtual 3D reconstruction.
   For example, Non-rigid Iterative Closest Point (NICP), in particular in combination with landmarks defined in the step of indicating, in the virtual 3D reconstruction, points that are characteristic points of the oral cavity, may be used for noise reduction, hole filling and resampling. The general concept of NICP is disclosed in B. Amberg et al. "Optimal step nonrigid icp algorithms for suface registration, in 2007 IEEE Conference on Computer Vision and Pattern Recognition, 2007, pp. 1-8, for example.

In an embodiment of the method comprising a step of providing a further virtual 3D reconstruction of a further oral cavity and a step of processing the virtual 3D reconstruction, the step of processing the virtual 3D reconstruction comprising a step of transferring information comprised in the further virtual 3D reconstruction to the virtual 3D reconstruction, the step of processing the virtual 3D reconstruction comprises the step of bridging, in the virtual 3D reconstruction, a gap in the oral cavity represented by the virtual 3D reconstruction, wherein the gap is bridged during the step of registering at least a portion of the further virtual 3D reconstruction or a template mesh thereof and the virtual 3D reconstruction.

For example, the step of registering may be restricted to the area of the oral cavity that comprises the gap to be bridged, for example to the alveolar ridge area or teeth area.

An advantage of registering only the area that is important for bridging is that it can be avoided that registration focus is shifted.

Further, the bridge area may be excluded from being registered, wherein it still serves as a stiff constraint for the vertices that are deformed during registration.

It was found out that a restriction of registering to the area of the oral cavity that comprises the gap to be bridged and excluding the bridge area from being registered results in bridges that are suitable for providing custom-made intra-oral appliances, for example appliances for treating cleft palate, mouthguards or for dental appliances.

The steps disclosed with respect to embodiments comprising a step of providing a further virtual 3D reconstruction of a further oral cavity and a step of processing the virtual 3D reconstruction, the step of processing the virtual 3D reconstruction comprising a step of transferring information comprised in the further virtual 3D reconstruction to the virtual 3D reconstruction do not, or at least not significantly, reduce the high degree of automatization of the method.

In particular, the step of processing the virtual 3D reconstruction for obtaining a processed virtual 3D reconstruction of the oral cavity may be an automated step with the exception of the optional step of indicating, in particular in the virtual 3D reconstruction or a processed version thereof, points that are characteristic points of the oral cavity in embodiments in which the optional step of indicating points is non-automated or non-fully automated.

The optional step of indicating points that are characteristic points of the oral cavity may be according to any embodiment as disclosed above. In particular, it may be non-automated because a user has to indicate the characteristic points manually, in particular via a graphical user interface (GUI) or it may be automated, for example by using a model of an Artificial Intelligence (AI), wherein the model is trained to localize the characteristic points on image data of the oral cavity.

Further, the following steps and sub-steps may be automated steps if present in the method:
The step of providing a further virtual 3D reconstruction of a further oral cavity, a step of providing a template mesh of the further virtual 3D reconstruction, the step of transferring information, the step of segmenting the virtual 3D reconstruction and related steps, in particular steps for identifying and/or labelling areas or regions of the virtual 3D reconstruction, a step for increasing the completeness of the virtual 3D reconstruction, a step for increasing the accuracy of the virtual 3D reconstruction, the step of bridging, the step of registering, and the step of bringing in dense correspondence.

The invention provides further a method for obtaining a virtual 3D reconstruction of an oral cavity that is suitable for use in designing a custom-made intra-oral appliance, although the input to the method for obtaining a virtual 3D reconstruction of an oral cavity is one or more 2D images that are acquired using a consumer electronics product, such as a camera of a smartphone or a handheld camera.

The method for obtaining a virtual 3D reconstruction of an oral cavity comprises:
- A step of obtaining a 2D image of an oral cavity, in particular of the palate, the alveolar ridge and, as the case may be, the teeth, wherein the image is acquired by a consumer electronics product.
   In many embodiments, the step of obtaining a 2D image of an oral cavity is a step of obtaining a plurality of 2D images, wherein the images are acquired by a consumer electronics product.
   However, it has been found out that a single 2D image may be sufficient for obtaining a virtual 3D reconstruction of an oral cavity if processed further according to the disclosed method for obtaining a virtual 3D reconstruction of an oral cavity. This is in particular the case if depth (height) information is attributed to the 2D image, this means, for example, if a 2D depth image is attributed to a 2D image. An RGB-D image that can be acquired by smart phones, tablets, handheld cameras etc. is an example of a 2D image with attributed depth information.
- A step of transforming the obtained 2D image (the obtained plurality of 2D images, as the case may be) into an initial virtual 3D reconstruction of the oral cavity.
   In other words, the obtained 2D image(s) or a selection thereof may be processed into an initial virtual 3D reconstruction, in particular into a single initial virtual 3D reconstruction.
   The initial virtual 3D reconstruction is in particular a 3D point cloud, a 3D mesh, or a similar 3D representation generated by processing the 2D image(s) or a portion thereof.
- A step of providing a further virtual 3D reconstruction of a further oral cavity.
   The further oral cavity and the further virtual 3D reconstruction may be according to any embodiment disclosed with respect to the method for providing a custom-made intra-oral appliance.
- A step of processing the initial virtual 3D reconstruction for obtaining a processed initial virtual 3D reconstruction of the oral cavity, wherein the step of processing the initial virtual 3D reconstruction comprises a step of transferring information comprised in the further virtual 3D reconstruction to the initial virtual 3D reconstruction.
   The processed initial virtual 3D reconstruction reproduces the oral cavity shown in 2D image (in the plurality of 2D images, as the case may be) obtained in the step of obtaining a 2D image of an oral cavity with higher accuracy and quality. In other words, the processed initial virtual 3D reconstruction fits better the oral cavity. In particular, this is the case because noise has been reduced and regions that were not or could not be reconstructed in the step of transforming the obtained 2D image(s) into an initial virtual 3D reconstruction have been filled. In particular, holes have been filled and regions that were not shown or not sufficiently shown in the 2D image(s) have been reconstructed.

In an embodiment, the 2D image (the plurality of 2D images, as the case may be) is acquired according to a given Standard Operation Procedure (SOP). The SOP may comprise at least one of:
- Arranging a mirror at the mouth opening in a manner that the palate, the alveolar ridge and, as the case may be, the teeth are visible from the outside of the oral cavity via the mirror.
- Acquiring images from a plurality of angles, wherein the plurality of angles is within a range between a first limiting angle and a second limiting angle.
   The angles of the plurality of angles may be given. In particular, the given angles may be distributed equidistantly in the range between the first limiting angle and the second limiting angle.
- Acquiring a given number of images, in particular a given number of images at each given angle.

In an embodiment, the the step of obtaining a 2D image comprises obtaining a 2D video, wherein obtaining the 2D video comprises capturing the oral cavity from a range of angles.

In particular, the 2D video may be obtained according to a given SOP comprising:
- Arranging a mirror at the mouth opening in a manner that the palate, the alveolar ridge and, as the case may be, the teeth are visible from the outside of the oral cavity via the mirror.
- Acquiring images (frames) from a plurality of angles by capturing the oral cavity, more precisely the palate, the alveolar ridge and, as the case may be, the teeth, from a continuous range of angles and with a fluid, round movement of the consumer electronics product, wherein the continuous range of angles covers the range between a first limiting angle and a second limiting angle.
   In other words, the oral cavity is captured from a continuous range of angles and with a fluid, round movement of the consumer electronics product.
- Acquiring a given number of images (frames), in particular a given number of images at given angles, by having a video length, this means the time needed for the movement of the consumer electronics product from the first limiting angle to the second limiting angle, that is adapted to the frame rate of the camera of the consumer electronics product used and to the number of given angles at which an image of good quality is needed.
   Usually, acquiring the 2D video takes between 10 to 35 seconds if the frame rate is between 20 and 60 fps and the number of given angles at which an image of good quality is needed is between 50 and 250, in particular between 100 and 200.

The 2D video obtained may be broken down in single frames (images, in the following) and the method may comprise at least one of the following steps:
- A step of filtering out blurred images.
   The step of filtering out blurred images may comprise automated detection and filtering out of blurred images.
- A step of reducing the number of images, in particular reducing the number of images in a manner that each image that remains after reducing the number of images shows the oral cavity from a different angle, wherein the angles from which the oral cavity is shown by the remaining images are equidistantly distributed over the continuous range of angles.
   The step of reducing the number of images is usually an automated step.
- A step of identifying a region of interest (ROI). In particular a ROI may be identified in each (remaining as the case may be) image.
   The ROI usually contains the palate, the alveolar ridge and, as the case may be, the teeth.
   The ROI usually contains the same for all images in which it is identified.
- A step of processing at least one region to indicate that this region must not be considered in following steps. For example, the pixels of the region may be replaced by black pixels.
   In particular, all regions that do not belong to the ROI and/or all regions that do not show a portion of the oral cavity in sufficient quality, for example because the pixels of the regions are overexposed (too bright), may be processed to indicate that this (these) region(s) must not be considered in following steps.

In other words, the method may comprise a step of processing the 2D video obtained, wherein the step of processing comprises at least one of the above-listed steps.

Also embodiments of the method in which a 2D image (a plurality of 2D images, as the case may be) is obtained, wherein the 2D image(s) is not obtained by acquiring a 2D video, may comprise steps that correspond to the above-listed steps.

In particular, at least one of the following may apply:
- The step of obtaining a 2D image is a step of obtaining a plurality of 2D images, wherein the method comprises the step of filtering out blurred images.
- The step of obtaining a 2D image is a step of obtaining a plurality of 2D images, wherein the method comprises the step of reducing the number of images.
- The method comprises the step of identifying a region of interest (ROI).
- The method comprises the step of processing, for example blacking, at least one region to indicate that this region must not be considered in following steps

In other words, the method may comprise a step of processing the image(s) obtained, wherein the step of processing comprises at least one of the above-listed steps.

(In an embodiment and independent of the embodiment of the step of obtaining a 2D image (a plurality of 2D images, as the case may be) and/or the manner the 2D image(s) is acquired, the the step of transforming the obtained 2D image(s) into an initial virtual 3D reconstruction, in particular into a 3D point cloud, of the oral cavity comprises a Structure from Motion (SFM) procedure. In other words, the obtained and optionally processed 2D image(s) or, as the case may be, a selection of the obtained and optionally processed 2D image(s) is/are processed by a SFM procedure.

In particular, a photogrammetric algorithm, for example as provided in the publicly available Structure from Motion (SFM) tool called "COLMAP", may be used in the step of transforming the obtained 2D image(s) into an initial virtual 3D reconstruction, in particular into a 3D point cloud.

The initial virtual 3D reconstruction may be processed before its use in further steps of the method. For example, the method may comprise a step of applying a statistical radius outliner removal method to the initial virtual 3D reconstruction.

In an embodiment and independent of the embodiment of the step of obtaining a 2D image (a plurality of 2D images, as the case may be), of the manner the 2D image(s) is acquired and/or of the step of transforming the obtained 2D image(s) into an initial virtual 3D reconstruction, the further virtual 3D reconstruction provided in the step of providing a further virtual 3D reconstruction of a further oral cavity is a morphable model.

The morphable model may be generated by using collected datasets of professionally obtained plaster cast imprints and/or 3D scans of oral cavities.

The morphable model may be refined from time to time by considering further plaster cast imprints, 3D scans and/or virtual 3D reconstructions of the oral cavity obtained in a different manner, for example by use of the method for obtaining a virtual 3D reconstruction of an oral cavity.

The step of transferring information comprised in the further virtual 3D reconstruction to the initial virtual 3D reconstruction may comprise a step of applying the morphable model to the initial virtual 3D reconstruction.

In an embodiment and independent of the embodiment of the step of obtaining a 2D image (a plurality of 2D images, as the case may be), of the manner the 2D image(s) is acquired and/or of the step of transforming the obtained 2D image(s) into an initial virtual 3D reconstruction, the further virtual 3D reconstruction is given by a Principal Component Analysis (PCA) model.

The PCA model may be generated by using collected datasets of professionally obtained plaster cast imprints and/or 3D scans of oral cavities.

The PCA model may be refined from time to time by considering further plaster cast imprints, 3D scans and/or virtual 3D reconstructions of the oral cavity obtained in a different manner, for example by use of the method for obtaining a virtual 3D reconstruction of an oral cavity.

The step of transferring information comprised in the further virtual 3D reconstruction to the initial virtual 3D reconstruction may comprise a step of applying the Principal Component Analysis model to the initial virtual 3D reconstruction.

A template may be provided during or after generating the morphable model or the PCA model. In particular, the template may be an average morph or an average of the PCA model.

The template may be used in a step of aligning the initial virtual 3D reconstruction before applying the morphable model or the PCA model to it.

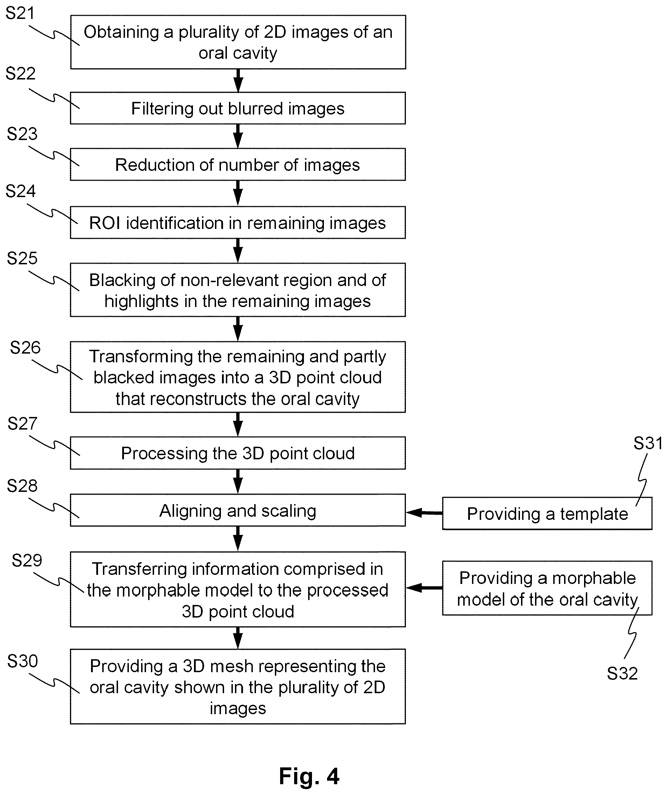

The method for obtaining a virtual 3D reconstruction according to any embodiment disclosed is a highly automated method. This becomes apparent from the above and the description of figure 4 further below. In particular, all steps of the method may be automated except the acquisition of the 2D image(s), the optional step of identifying a region of interest in embodiments in which the optional step of identifying a region of interest is non-automated or non-fully automated, the optional step of processing the initial virtual 3D reconstruction in embodiments in which the step of processing the initial 3D reconstruction is non-automated or non-fully automated, for example in embodiments comprising a statistical radius outliner removal method, and the optional step of landmarking in embodiments in which the optional step of landmarking is non-automated or non-fully automated.

The virtual 3D reconstruction obtained by carrying out the method of obtaining a virtual 3D reconstruction of an oral cavity in any embodiment disclosed may be used to design an intra-oral appliance.

In other words, the invention provides further a method for designing a custom-made intra-oral appliance, wherein the method comprises a step of using a virtual 3D reconstruction of an oral cavity, wherein the virtual 3D reconstruction is obtained by the method of obtaining a virtual 3D reconstruction of an oral cavity according to any embodiment disclosed.

The designed appliance may be used to manufacture a custom-made intra-oral appliance according to the designed appliance. Manufacturing may be carried out as disclosed with respect to the method for providing a custom-made intra-oral appliance.

The invention concerns further a computer program comprising instructions which, when the program is executed by a computer, cause the computer to carry out at least one of the method for providing an intra-oral appliance according any embodiment disclosed, the method for obtaining a virtual 3D reconstruction of an oral cavity according to any embodiment disclosed, and the method for designing an intra-oral appliance.

The invention concerns further a computer-readable medium having stored thereon instructions which, when executed by a computer, cause the computer to carry out at least one of the method for providing an intra-oral appliance according any embodiment disclosed, the method for obtaining a virtual 3D reconstruction of an oral cavity according to any embodiment disclosed, and the method for designing an intra-oral appliance.

The invention concerns further a data carrier signal carrying instructions which, when executed by a computer, cause the computer to carry out at least one of the method for providing an intra-oral appliance according any embodiment disclosed, the method for obtaining a virtual 3D reconstruction of an oral cavity according to any embodiment disclosed, and the method for designing an intra-oral appliance.

In particular, the invention concerns any reproducible computer-readable signal encoding the computer program that, when loaded and executed on a computer, causes the computer to carry out at least one of the method for providing an intra-oral appliance according any embodiment disclosed, the method for obtaining a virtual 3D reconstruction of an oral cavity according to any embodiment disclosed, and the method for designing an intra-oral appliance.

The invention concerns further a method of manufacturing a non-transitory computer readable medium, comprising the step of storing, on the computer readable medium, computer-executable instructions which when executed by a processor of a computing system, cause the computing system to perform at least one of the method for providing an intra-oral appliance according any embodiment disclosed, the method for obtaining a virtual 3D reconstruction of an oral cavity according to any embodiment disclosed, and the method for designing an intra-oral appliance.

At least one of the method for providing an intra-oral appliance according any embodiment disclosed, the method for obtaining a virtual 3D reconstruction of an oral cavity according to any embodiment disclosed, and the method for designing an intra-oral appliance may be integrated in a system configured for carrying out the at least one method.

The system comprises a controller and a communication device.

The communication device is configured to receive input needed for carrying out the at least one method and to provide this input to the controller. The virtual 3D reconstruction obtained in the step of obtaining a virtual 3D reconstruction, the further virtual 3D reconstruction provided in the step of providing a further virtual 3D reconstruction, the 2D image(s) obtained in the step of obtaining a 2D image, and the provided template are examples of input that may be needed for carrying out the at least one method according to some embodiments.

The controller is configured to receive the input provided by the communication device and to carry out the at least one method. The controller may be or be part of the computer mentioned above.

The controller is configured further to communicate with a user interface, in particular a graphical user interface, for visualising at least one of an input and an output of the at least one method, and/or for retrieving information needed for carrying out the at least one method. The latter is in particular the case if the at least one method comprises a step that is non-automated or non-fully automated, in particular one of the non-automated or non-fully automated steps disclosed above.

The communication with the user interface may take place via the communication device.

The controller is configured further to provide an output of the at least one method to a computerized device, for example a computerized device for manufacturing an appliance or a computerized user device. The computerized device may comprise a further controller and a (further, as the case may be) memory.

The controller may provide the output via the communication device.

The volumetric appliance mesh generated in the method for providing a custom-made intra-oral appliance, in particular the volumetric appliance mesh in a format supported by software of computer-assisted manufacturing, in a format for visualization on the user interface, and/or in a format for further processing on a graphical user interface, and the virtual 3D reconstruction obtained in the method for obtaining a virtual 3D reconstruction are examples of output that may be provided by the controller to the computerized device.

The subject matter of the invention will be explained in more detail in the following text with reference to exemplary embodiments which are illustrated in the attached figures, which schematically show:
- Fig. 1: a visualization of an exemplary embodiment of a method for providing a custom-made intra-oral appliance for treating unilateral cleft lip and palate;
- Fig. 2: a visualization of a volumetric appliance mesh generated during carrying out the method visualized in fig. 1;
- Fig. 3: a picture of an appliance manufactured according to the volumetric appliance mesh of fig. 2; and
- Fig. 4: a flow chart of an exemplary embodiment of a method for providing a virtual 3D reconstruction of an oral cavity that is suitable for use in designing a custom-made intra-oral cavity.

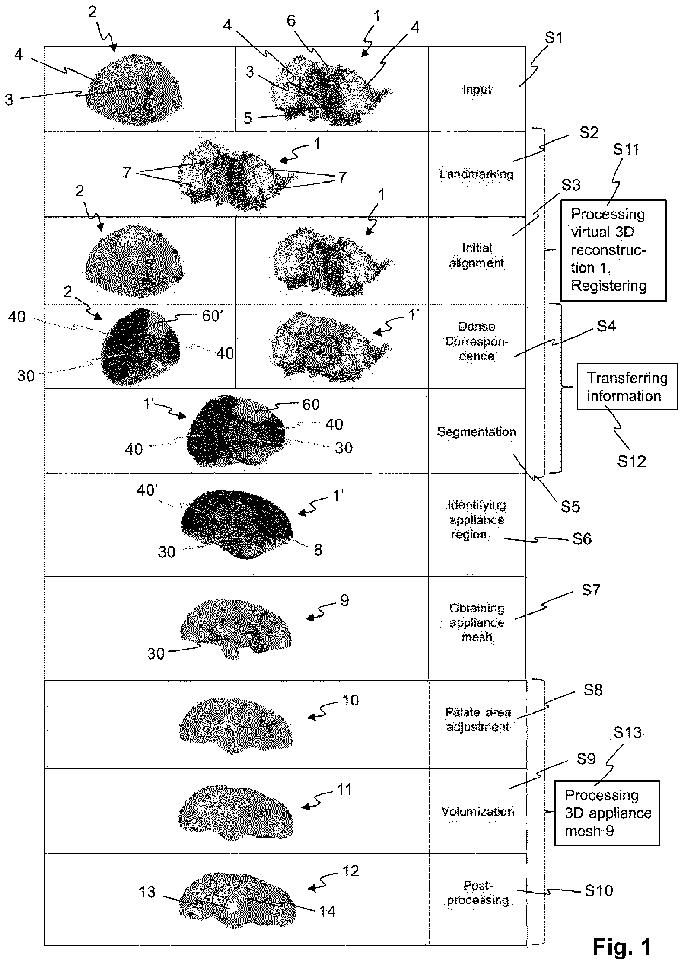

**Fig.** 1 shows a visualization of an exemplary embodiment of a method for providing a custom-made intra-oral appliance. The embodiment shown is for the exemplary case of providing a custom-made intra-oral appliance 100 for treating unilateral cleft lip and palate (UCLP). However, steps corresponding to the shown steps are also suitable for providing a custom-made intra-oral appliance for treating bilateral cleft lip and palate (BCLP), a custom-made intra-oral dental appliance or a custom-made intra-oral mouthguard, for example.

The method shown comprises a step S1 of obtaining a virtual 3D reconstruction 1 of an oral cavity, more precisely of a portion of the oral cavity, and of a template mesh 2 of a further oral cavity, more precisely of a portion of the further oral cavity.

The portion of the oral cavity and the portion of the further oral cavity consist of the palate 3 and the alveolar ridge 4, in the embodiment shown in fig. 1.

In particular, the virtual 3D reconstruction 1 shown in fig. 1 represents the palate 3, the alveolar ridge 4, the cleft 5 in the palate 3, and the cleft 6 in the alveolar ridge 4.

The template mesh 2 shown in fig. 1 represents an average of a plurality of healthy palates 3 and healthy alveolar ridges 4.

The origin of the virtual 3D reconstruction 1 is of minor or even no relevance for the method. The virtual 3D reconstruction 1 can be derived from a 2D image or a plurality of 2D images of the oral cavity, also 2D image(s) acquired by a consumer electronics product, or it can be based on 3D intra-oral scanning or on digitalization of an impression of the oral cavity, for example.

The virtual 3D reconstruction 1 and the template mesh 2 are inputs to the method, in particular to a step of processing the virtual 3D reconstruction (1) that is a step S1 of registering the template mesh 2 and the virtual 3D reconstruction 1, in the embodiment shown in fig.1. In the embodiment according to fig. 1, only a portion of the template mesh 2 is registered to the virtual 3D reconstruction 1, as discussed further below.

The step S11 of registering comprises a step S2 of landmarking the virtual 3D reconstruction 1, this means a step of indicating points that are characteristic points 7 of the oral cavity. According to the embodiment shown in fig. 1, at least the following points are indicated manually and for both portions of the cleft palate/alveolar ridge by using a GUI:
1) Most anterior point on top of the crest.
2) Lateral sulcus vertex/canine point on top of the crest.
3) Crest point marking the appliance's posterior end.
4) Sulcus point marking the appliance's posterior end.
5) Cleft region/lift-off start on the same horizontal plane as landmark 2).

The step S11 of registering comprises further a step S3 of initial alignment in which the template mesh 2 and the virtual 3D reconstruction 1 are closely aligned. In particular, the template mesh 2 and the virtual 3D reconstruction 1 are put in similar coordinate frames.

For example, Procrustes analysis as disclosed in J. C. Gower, "Generalized Procrustes analysis", Psychometrika, vol 40, no. 1, pp. 33-51, Mar 1975 may be used for a rough mesh alignment via the landmarks set in the step S2 of landmarking. Afterwards, Iterative Closest Point (ICP) as disclosed, for example, in Y. Chen et al., "Object modelling by registration of multiple range images," in Proceedings 1991 IEEE International Conference on Robotics and Automation, 1991, pp. 2724-2729 vol. 3 and in P Besl et al., "A method for registration of 3-d shapes, " IEEE Transactions on Pattern Analysis and Machine Intelligence, vol. 14, no. 2, pp. 239-256, 1992 may be used to closely align the virtual 3D reconstruction 1 with the template mesh 2.

The step S11 of registering comprises further a step S12 of transferring information from the template mesh 2 to the virtual 3D reconstruction 1. In the embodiment shown in fig. 1, information that allows for noise reduction and hole filling, this means adding of missing or correction of obviously wrong vertices, as well as information that allows for bridging the cleft 6 in the alveolar ridge are transferred.

In the embodiment shown in fig. 1, noise reduction, hole filling and bridging is done during a step S4 of bringing the template mesh 2 and the virtual 3D reconstruction 1 in dense correspondence.

For example, Non-rigid Iterative Closest Point (NICP), in particular in combination with landmarks 7 defined in the step S2 of landmarking may be used for noise reduction and hole filling. The general concept of NICP is disclosed in B. Amberg et al. "Optimal step nonrigid icp algorithms for suface registration, in 2007 IEEE Conference on Computer Vision and Pattern Recognition, 2007, pp. 1-8, for example.

For example, a specifically adapted version of NICP code implementation published in J. Alabort-i-Medina et al., "Menpo: A comprehensive platform for parametric image alignment and visual deforable models," in Proceeding of the ACM International Conference on Multimedia, ser. MM'14, New York, NY, USA: ACM, 2014, pp.679-682 may be used for bridging the cleft 6 in the alveolar ridge area.

In the embodiment according to fig. 1, the specific adaption of the NICP code published by J. Alabort-i-Medina et al. comprises restricting the registration of the template mesh 2 and the virtual 3D reconstruction to the alveolar ridge area 40 and excluding the (expected as the case may be) area 60, 60' of the cleft, this means excluding a bridge area 60, 60', from being registered, at least in a first registration step if there is a plurality of registration steps used.

It is avoided that areas that are unimportant or even disturbing for generating the appliance, such as the cleft area, shift the registration focus by registering, at least in a first registration step, only those areas of the template mesh 2 and the virtual 3D reconstruction that are important for generating the appliance.

Further, the data weights parameter provided in the NICP implementation according to J. Alabort-i-Medina et al. is used to create a bridge that connects the left and the right alveolar ridge of the UCLP by excluding (in a first registration step, at least) the bridge area 60, 60' during registration according to the specifically adapted version of the NICP implementation according to J. Alabort-i-Medina et al.

The step S11 of registering comprises further a step S5 of segmenting the virtual 3D reconstruction 1' processed for comprising information transferred from the template mesh 2, this means that vertices of the processed virtual 3D reconstruction 1' are labelled (annotated, marked, categorized) according to the body portion they represent, this means according to their anatomic meaning. In the embodiment shown in fig. 1, the vertices of the processed virtual 3D reconstruction 1' are labelled to belong to one of the palate area 30, the alveolar ridge area 40 or the area 60 of the cleft in the alveolar ridge.

The step S4 of segmenting may be executed in different manner, for example:
- A model of an Artificial Intelligence (AI) may be used, wherein the model is trained for object classification, wherein the objects that can be classified by the model comprise the palate area 30, the alveolar ridge area 40 and the area 60 of the cleft in the alveolar ridge, at least.
- The vertices of the processed virtual 3D reconstruction 1' that represent the palate area 30, the alveolar ridge area 40 or the area 60 of the cleft in the alveolar ridge may be identified and labelled by transferring a labelling of vertices of the template mesh 2 to vertices of the processed virtual 3D reconstruction 1'.
   This can be done in an especially easy manner during or after the step S4 of bringing the template mesh 1 and the virtual 3D reconstruction 1 in dense correspondence.
- The vertices representing the palate area 30, the alveolar ridge area 40 or the area 60 of the cleft in the alveolar ridge are identified and labelled by use of an algorithm, wherein the algorithm is configured to identify said areas by comparing vertices of the processed virtual 3D reconstruction 1' with corresponding vertices of the template mesh 2.

In the embodiment shown in fig. 1, the step S5 of segmenting the virtual 3D reconstruction 1 is carried out according to the second bullet point above. This means, as indicated in fig. 1, the template mesh 2 obtained in the step S1 of obtaining a virtual 3D reconstruction 1 and a template mesh 2 is a labelled template mesh. In the embodiment shown in fig. 1, the vertices of the template mesh 2 are labelled by the provider of the template mesh 2 to belong to one of the palate area 30, the alveolar ridge are 40 or the area 60' in which the cleft in the alveolar ridge is expected.

However, one can envisage to carry out the step S5 of segmenting prior to the step S4 of bringing the template mesh 2 and virtual 3D reconstruction 1 in dense correspondence. In particular the approaches according to the first and third bullet point may be suitable for segmenting at least one of the obtained, landmarked or initially aligned 3D virtual reconstruction.

The embodiment shown in fig. 1 comprises further a step S6 of identifying an appliance region 8 in the virtual 3D reconstruction 1' processed for comprising information transferred from the template mesh 2 to the virtual 3D reconstruction.

Alternatively to identifying the appliance region 8 in the processed virtual 3D reconstruction 1', the appliance region may be identified in the virtual 3D reconstruction 1, in the landmarked (and optionally labelled) virtual 3D reconstruction or in the labelled (and optionally landmarked) virtual 3D reconstruction, for example.

In the embodiment according to fig. 1, the appliance region 8 that is identified in the step S6 of identifying an appliance region 8 consists of the vertices of the palate area 30 and the bridged alveolar ridge area 40', this means the alveolar ridge area 40 and the area 60 of the former cleft in the alveolar ridge, of the processed virtual 3D reconstruction 1', this means of the virtual 3D reconstruction in its state after the step S11 of registering.

The embodiment according to fig. 1 comprises further a step S7 of obtaining a 3D appliance mesh 9 from the appliance region 8 by cutting away the vertices that do not belong to the identified appliance region 8.

The 3D appliance mesh 9 as well as the cleft-free 3D appliance mesh 10, the volumetric appliance mesh 11 and the post-processed volumetric appliance mesh 12 that are discussed below, are shown down-side-up in fig. 1. This means the surface of the later manufactured appliance 100 that faces the tongue during use of the appliance is visible in fig. 1.

The 3D appliance mesh 9 and its boundaries are smoothed, for example by Laplacian smoothing, in particular Laplacian smoothing adjusted for boundary neighbour smoothing.

Alternatively or in addition to smoothing the 3D appliance mesh 9, smoothing may be carried out prior or subsequent to the step S7 of obtaining 3D appliance mesh 9.

The embodiment according to fig. 1 comprises further a step S13 of processing the 3D appliance mesh 9.

In the embodiment shown, the step S13 of processing the 3D appliance mesh 9 comprises a step S8 of palate area 30 adjustment in which the palate area 30 of the 3D appliance mesh 9 is amended in a manner that it simulates a healthy palate while still keeping a gap between the palate area 30 of the later manufactured appliance 100 and the palate during use of the appliance. In particular, the palate cleft or what remains from it in the palate area 30 of the 3D appliance mesh 9 is filled in the step S8 of palate area 30 adjustment.

In other words, a cleft-free 3D appliance mesh 10 is obtained after the step S8 of palate area 30 adjustment.

For example, the step S8 of palate area 30 adjustment may be carried out by using an adjusted version of selective Laplacian smoothing on all vertices of the palate area 30.

In the adjusted version of selective Laplacian smoothing, the vertices of the palate area 30 are adjusted with an additional restriction on the boundary vertices of the cleft area to only move in axial direction. Further, the vertices of the palate area 30 are forced to go around a sphere by not allowing any vertex adjustment to penetrate the sphere and they are forced to not enter a palate area mesh that is generated by offsetting the palate area 30 of the 3D appliance mesh 9 by the envisaged gap between the appliance and the palate during use of the appliance 100. The offset (gap) may be between 1 and 5 mm, for example 1, 2, 3, 4 or 5 mm. In the embodiment according to fig. 1, the offset is 2.5 mm.

The sphere parameters may be derived via a Voronoi diagram that can be used to find the locally largest empty spheres, for example (M. I. Shamos, Computational geometry, Yale University, 1978, for example). Thereby, the palate area 30 of the 3D appliance mesh 9 may be offset by the envisaged gap before the Voronoi diagram is constructed on a larger set of constraining points which gives a finite set of spheres of which none penetrates the offset palate area. The spheres that touch both the left and the right alveolar ridge are considered only, then. Finally, the optimal sphere is determined by determining which of these spheres has the minimum squared distance to the offset palate area.

In the embodiment shown, the step S13 of processing the 3D appliance mesh 9 comprises further a step S9 of volumization in which the cleft-free 3D appliance mesh 10 is thickened to obtain a volumetric appliance mesh 11.

For example, an offset copy of the cleft-free 3D appliance mesh 10 may be generated and connected with the surface of the original cleft-free 3D appliance mesh 10.

The connection between the offset copy and the original cleft-free 3D appliance mesh 10 may be a connection via a half-ellipse to get a smooth border transition.

Convex regions of the original cleft-free 3D appliance mesh 10 may be smoothed out selectively before offsetting the vertices along their normal to avoid creating large self-intersections.

In the embodiment according to fig. 1, the smoothed-out cleft-free 3D appliance mesh 10 is offset by 2 mm to obtain a thickness of volumetric appliance mesh 11 of approximately 2 mm.

Further, additional selective smoothing around narrow triangles may be applied to minimize the creation of spikes on the mesh boundaries and a small number of uniform Laplacian smoothing on the whole mesh may be applied to correct remaining small errors.

Finally, the step S13 of processing the 3D appliance mesh 9 comprises, according to the embodiment shown in fig. 1, a further step S10 of post-processing the volumetric appliance mesh 11 by the user via a GUI on which the volumetric appliance mesh 11 is shown. Alternatively, the step S10 of post-processing may be carried out fully automated or semi-automated, for example by giving the opportunity to the user to select only which kind of postprocessing she/he wants.

In the embodiment shown in fig. 1, the step S10 of post-processing comprises adding a ventilation hole 13 and elements 14 that simulate rugae of healthy palate tissue.

For example, a sinusoidal function may be used for generating the elements 14 that simulate rugae of healthy palate tissue.

Further post-processing may be envisaged, for example enlarging an extension of the volumetric appliance mesh 11, retouching the volumetric appliance mesh etc.

The post-processed volumetric appliance mesh 12 can be considered as a final design of the custom-made intra-oral appliance for UCLP treatment. This final design is provided by a format supported by software of computer-assisted manufacturing and manufactured according to this final design by computer-assisted manufacturing, in particular by 3D printing.

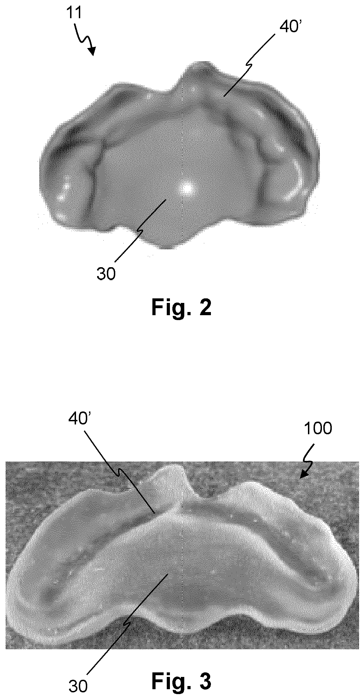

**Fig. 2** shows a visualization of the volumetric appliance mesh 11 before the step S10 of post-processing the volumetric appliance mesh 11. In fig. 2, and different to fig. 1, the volumetric appliance mesh 11 is shown as it will be inserted into the oral cavity for use, this means the surface of the later manufactured appliance 100 that will be adjacent to the cleft palate and cleft alveolar ridge is visible. In other words, the volumetric appliance mesh 11 of fig. 2 is shown up-side-up, whereas the volumetric appliance mesh 11 (as well as the post-processed volumetric appliance mesh 12 and all other meshes shown in fig. 1) is shown down-side-up in fig. 1.

Fig. 2 shows the palate area 30 and the bridged alveolar ridge area 40' in more detail.

**Fig. 3** shows a picture of an appliance 100 manufactured according to the volumetric appliance 11 mesh of fig. 2 by 3D printing. The picture shows the appliance up-side-up, whereby details of the palate area 30 and the bridged alveolar ridge area 40' can be identified.

**Fig. 4** shows a flow chart of an exemplary embodiment of a method for obtaining a virtual 3D reconstruction of an oral cavity, more precisely of a portion thereof, the virtual 3D reconstruction being suitable for use in designing a custom-made intra-oral appliance. In particular, the obtained virtual 3D reconstruction is suitable for use in a method for providing a custom-made intra-oral appliance, for example for use in the method disclosed with respect to figs 1-3.

The flow chart comprises optional steps that help to improve the accuracy of the obtained virtual 3D reconstruction but that are not absolutely required for obtaining a virtual 3D reconstruction suitable for use in designing a custom-made intra-oral appliance.

The method according to fig. 4 comprises the following steps:
- A step S21 of obtaining a plurality of 2D images of an oral cavity wherein the images are acquired by a consumer electronics product comprising a camera.
   It has been established that a camera of a state-of-the-art smartphone is able to acquire a plurality of 2D images, for example by acquiring a video, that are sufficient in quality for obtaining a virtual 3D reconstruction being suitable for use in designing a custom-made intra-oral cavity by carrying out the method shown in fig. 4.
   Therefore, the 2D images obtained in the step S21 of obtaining a plurality of 2D images are acquired by videoing the oral cavity with a smartphone, in the exemplary embodiment shown in fig. 4.
   However, a Standard Operation Procedure (SOP) is used to ensure optimal capture behaviour and to support the generation of a video that is suitable for contributing to the generation of a virtual 3D reconstruction of sufficient quality and accuracy.
   The SOP used comprises:
      ∘ Using a mirror arranged at the mouth opening in a manner that the palate and alveolar ridge are visible from the outside via the mirror.
      ∘ Videoing the palate and alveolar ridge from a continuous range of angles with a fluid, round movement of the camera. The continuous range of angles covers every possible angle from which the palate and alveolar ridge is visible via the mirror. In other words, the continuous range of angles covers all angles between a first limiting angle at which the palate and alveolar ridge are only just visible and a second limiting angle that is opposite to the first limiting angle and at which the palate and alveolar ridge are only just visible.
         The fluid, round movement of the camera is a fluid, round movement from the first limiting angle to the second limiting angle, wherein the movement takes around 30 s.
         It goes without saying that the movement may take less or more than 30 s if the automated processing of the video is adapted accordingly.
         It goes without saying that, instead of acquiring a video, a plurality of images comprising images acquired from a plurality of set angles, in particular from a plurality of set angles only, and optionally a set number of images acquired from each angle of the plurality of set angles only, may be acquired.
- A step S22 of filtering out blurred images.
   For example, the step S22 of filtering out blurred images may comprise using an algorithm that transforms an image (frame in the case of the images being obtained in the format of a video) into grayscale and convolutes it with a Laplacian filter. The algorithm may be configured to compare a variance of the resulting pixel matrix with a threshold. If the variance of the resulting pixel matrix is below the threshold, the image may be considered blurred and removed.
- A step S23 of reducing the number of images.
   If the 2D images are obtained in the format of a 2D video or if more than one image is acquired from a set angle, the number of images needs to be reduced in a manner that the remaining images show the oral cavity from a discrete and approximately even distribution of angles between the first limiting angle and the second limiting angle. In particular, it needs to be avoided that the images remaining after the step S23 of reducing the number of images comprise similar viewing angles because images with similar viewing angles may result later in more artifacts.
   However, the number of remaining images must not be too small because a small number of images result later in a less dense point cloud. This is why obtaining the 2D images in the format of a 2D video using the SOP is advantageous over acquiring 2D images from different set angles because acquiring 2D images from different set angles results in a too small number of images or increases the efforts and time needed for acquiring the 2D images in an unacceptable manner.
   It has been established that more than 100 images are favourable for contributing to the generation of a virtual 3D reconstruction of sufficient quality and accuracy.
   In the embodiment in which the 2D images are obtained in the format of a 2D video, an algorithm may be used that selects every nth frame of the video after blurred frames were filtered out. The value of the number "n" depends on the frame rate used during acquisition of the video, the length of the video, this means the time used for the fluid, round movement from the first limiting angle to the second limiting angle, and the desired number of remaining images after the step of reducing the number of images.
   For example, if a smartphone camera having a framerate of 30 fps is used and the length of the video is 30 s, selecting one frame every 6^{th} of a second of the filtered-out video may result in a sufficient number of remaining frames.
- A step S24 of identifying a region of interest (ROI) in the remaining images.
   The ROI usually consists of the palate, the alveolar ridge and, as the case may be, the teeth.
   The ROI may be identified in an automated manner, for example by using a model of an AI, wherein the model is trained for object classification, wherein the objects that can be classified by the model comprise the (cleft, as the case may be) palate area, the (cleft, as the case may be) alveolar ridge area and, as the case may be, teeth area.
   However, it has been established that use of the following semi-automated tool in the step S24 of identifying the ROI may contribute to obtaining a virtual 3D reconstruction of sufficient quality and accuracy.
   The tool suggests the ROI in real-time while a user sets points inside and outside the ROI until the suggested ROI is precise enough. The tool is configured further to transfer automatically the ROI that is considered precise enough to other images of the remaining images, in particular to remaining images acquired subsequent to the image in which the user set points and if the remaining images are ordered chronologically.
   Details of the tool are disclosed in H. K. Cheng et al., "Modular interactive video object segmentation: Interaction-to-mask, propagation and difference-aware fusion", IEEE Conference on Computer Vision and Pattern Recognition (CVPR), 2021.
- A step S25 of blacking, in the remaining images, everything that does not belong to the identified ROI, this means blacking, in the remaining images, any region that is considered non-relevant.
   The step of blacking comprises replacing the pixels in the non-relevant region(s) with black pixels.
   In addition, the algorithm used in the step S25 of blacking may be configured further to black highlights in the remaining images, this means to replace areas that are too bright, for example due to the lighting conditions during acquisition of the 2D images or the 2D video. Therefore, the algorithm may be configured to make a per-pixel check for brightness.
- A step S26 of transforming the remaining and partly blacked images into a 3D point cloud that reconstructs the oral cavity, more precisely a portion of the oral cavity comprising, usually consisting of, the palate, the alveolar ridge and, as the case may be, the teeth.
   It has been established that using COLMAP, a publicly available Structure from Motion (SFM) tool, is sufficient to contribute to obtaining a virtual 3D reconstruction of sufficient quality and accuracy. The input to COLMAP is the remaining and partly blacked images and the output is the 3D point cloud that reconstructs the oral cavity.
- A step S27 of processing the 3D point cloud, in particular to remove artifacts, to reduce noise and, if needed, to reduce the number of points that are not part of the intra-oral region.
   It has been established that applying a statistical radius outliner removal method may be used to process the 3D point cloud in a manner sufficient to contribute to obtaining a virtual 3D reconstruction of sufficient quality and accuracy.
   For example, an algorithm may be used that is configured to determine the number of points in a specific radius around a (in particular each) point and to remove the (in particular each) point if (for which) the determined number of points does not correspond to a set number of points that should be in the specific radius around the point. As each removal influences the number of neighbours of other points, each point is first checked if it fulfills the criterion and points are removed only after each point was checked.
   The processed 3D point cloud, this means the 3D point cloud present after the step S27 of processing the 3D point cloud outputted by COLMAP, may be more suitable for subsequent steps if the algorithm is part of a semi-automated tool that allows the user to choose the number of points that should be in a specific radius around each point. Further, the tool may provide the opportunity to the user to reconsider or repeat the statistical radius outliner removal method and/or to change the specific radius and/or the number of points that should be in the specific radius. The tool may be configured to present the 3D point cloud and the points that would be removed by the actual specific radius and the actual number of points to the user. The tool may give the opportunity to the user to carry out the statistical radius outliner removal method several time and/or to optimize the specific radius and the number of points until the user is satisfied.
- A step S28 of aligning and scaling the processed 3D point cloud, this means the 3D point cloud present after the step S27 of processing the 3D point cloud outputted by COLMAP, to a template of a (further) oral cavity. In the embodiment shown in fig. 4, the template is a template of a morphable model of the oral cavity, more precisely of the palate, the alveolar ridge and, as the case may be, the teeth.
   The template, that is usually a template mesh, may be generated from the morphable model. For example, the template may be an average morph.
   The template is usually an input to the method for obtaining a virtual 3D reconstruction. In other words, the method comprises a step S31 of providing a template of the oral cavity.
   It has been established that aligning according to any embodiment disclosed with respect to the method for providing a custom-made intra-oral appliance is sufficient to contribute to obtaining a virtual 3D reconstruction of sufficient quality and accuracy. In particular, the processed 3D point cloud may be landmarked according to any embodiment disclosed with respect to the method for providing a custom-made intra-oral appliance, the template may be a template that is landmarked accordingly, and aligning may comprise Procrustes alignment and ICP.
   Usually, a kind of scaling is carried out during alignment.
   It has been established that a scaling that scales independently along any axis chosen, so that the template mesh and the processed 3D point cloud have the same distance between their maximum and minimum points in that axis direction, may be advantageous. The stretching caused by this kind of scaling allows for reduced variance between the template mesh and the processed 3D point cloud as it removes some of the scaling factors out of the variance.
- A step S32 of providing a further virtual 3D reconstruction of a (the) further oral cavity. In the embodiment shown in fig. 4, the further virtual 3D reconstruction is a morphable model of the oral cavity. The morphable model may be generated from collected datasets of professionally obtained plaster cast imprints and/or 3D scans of oral cavities.
   The morphable model may be generated using state-of-the-art methods.
- A step S29 of transferring information comprised in the morphable model to the processed 3D point cloud.
   The step S29 of transferring information comprises a step of applying the morphable model to the processed 3D point cloud.
   Usually, the morphable model is given as Principal Component Analysis (PCA) model. If this is the case, the step S29 of transferring information comprises a step of giving the processed 3D point cloud as input to the PCA model and a step of applying the PCA model to the processed 3D point cloud.
   Applying the PCA model to the processed 3D point cloud has various effects that are important for obtaining a virtual 3D reconstruction of sufficient quality and accuracy for use in designing a custom-made intra-oral cavity:
      ∘ The 3D point cloud can be transformed into a 3D mesh.
      ∘ Noise can be reduced.
      ∘ Regions that were not reconstructed during the SFM process can be filled.
   It was established that a linear system of equations and Thikonov regularization to optimize the weight of the eigenvectors of the PCA model is suitable for achieving noise reduction and filling of regions in a reasonable manner.
- A step S30 of providing a 3D mesh representing the oral cavity shown in the plurality of 2D images obtained in the step S21 of obtaining a plurality of 2D images of an oral cavity.
   The provided 3D mesh is the output of the step S29 of transferring information comprised in the morphable model to the processed 3D point cloud.
   As mentioned above, the morphable model is usually given as Principal Component Analysis (PCA) model. In this case, the provided 3D mesh is the output of the step of applying the PCA model to the processed 3D point cloud.

The virtual 3D reconstruction obtained by the method is then the 3D mesh provided in the step S30 of providing a 3D mesh representing the oral cavity shown in the plurality of 2D images obtained in the step S21 of obtaining a plurality of 2D images of an oral cavity.

## Claims

1. A computer-implemented method for providing an intra-oral appliance (100), the method comprises:
• a step (S1, S11) of obtaining a virtual 3D reconstruction (1, 1') of an oral cavity;
• a step (S6) of identifying an appliance region (8);
• an automated step (S7) of obtaining a 3D appliance mesh (9, 10) from the appliance region (8); and
• an automated step (S13) of processing the 3D appliance mesh for obtaining a volumetric appliance mesh (11, 12).

2. The method according to claim 1, wherein at least one of the following applies:
• the step (S1, S11) of obtaining a virtual 3D reconstruction (1) is an automated step with the exception of a step of acquiring image data of the oral cavity and with the exception of an optional step (S2) of indicating points that are characteristic points (7) of the oral cavity in embodiments in which the optional step of indicating points that are characteristic points of the oral cavity is non-automated or non-fully automated;
• the step (S6) of identifying an appliance region (8) is an automated step with the optional exception of a step of indicating points that are characteristic points (7) of the oral cavity in embodiments in which the optional step of indicating points that are characteristic points of the oral cavity is non-automated or non-fully automated.

3. The method according to claim 1 or 2, comprising a step of manufacturing an appliance (100), wherein the appliance is manufactured according to the volumetric appliance mesh (11, 12).

4. The method according to one of the previous claims, wherein the step (S1) of obtaining a virtual 3D reconstruction (1) of an oral cavity comprises a step of obtaining a 2D image of the oral cavity, wherein the image is acquired by a consumer electronics product.

5. The method according to one of the previous claims, comprising:
• a step (S1) of providing a further virtual 3D reconstruction (2) of a further oral cavity;
• a step (S11) of processing the virtual 3D reconstruction (1) for obtaining a processed virtual 3D reconstruction (1') of the oral cavity, wherein the step of processing the virtual 3D reconstruction comprises an automated step (S12) of transferring information comprised in the further virtual 3D reconstruction to the virtual 3D reconstruction.

6. The method according to claim 5, wherein the step (S11) of processing the virtual 3D reconstruction (1) comprises at least one of:
• a step of bridging, in the virtual 3D reconstruction, a gap (5, 6) in the oral cavity represented by the virtual 3D reconstruction;
• a step of registering at least a portion of the further virtual 3D reconstruction or a template mesh (2) thereof and the virtual 3D reconstruction;
or wherein the step (S11) of processing the virtual 3D reconstruction (1) comprises a step of bridging, in the virtual 3D reconstruction, a gap (5, 6) of the oral cavity shown in the virtual 3D reconstruction, wherein the gap is bridged during a step of registering at least a portion of the further virtual 3D reconstruction or a template mesh (2) thereof and the virtual 3D reconstruction.

7. The method according to claim 5 or 6, wherein the further virtual 3D reconstruction (2) is a statistical representation of a plurality of oral cavities.

8. The method according to one of claims 5-7, wherein at least one of an anatomic area (30, 40, 60') and the appliance region (8) is labelled in the further virtual 3D reconstruction (2).

9. The method according to one of the previous claims, wherein the step (S1, S11) of obtaining a virtual 3D reconstruction (1, 1') of an oral cavity comprises obtaining a virtual 3D reconstruction of an oral cavity comprising a cleft palate, wherein the method comprises, for generating a cleft-free 3D appliance mesh (10), at least one of:
• a step of processing the virtual 3D reconstruction (1, 1'), wherein the step of processing the virtual 3D reconstruction comprises approximating vertices representing the cleft palate to the surface of an ellipsoid;
• a step (S8) of processing the 3D appliance mesh (9), wherein the step of processing the 3D appliance mesh comprises approximating vertices representing the cleft palate to the surface of an ellipsoid.

10. A computer-implemented method for obtaining a virtual 3D reconstruction (1) of an oral cavity for use in designing an intra-oral appliance (100), the method comprises:
• a step (S21) of obtaining a 2D image of an oral cavity, wherein the image is acquired by a consumer electronics product;
• a step (S26) of transforming the obtained 2D image into an initial virtual 3D reconstruction of the oral cavity;
• a step (S32) of providing a further virtual 3D reconstruction of a further oral cavity;
• a step of processing the initial virtual 3D reconstruction for obtaining a processed initial virtual 3D reconstruction of the oral cavity, wherein the step of processing the initial virtual 3D reconstruction comprises a step (S29) of transferring information comprised in the further virtual 3D reconstruction to the initial virtual 3D reconstruction.

11. The method according to claim 10, wherein the 2D image is acquired according to a given Standard Operation Procedure.

12. The method according to claim 10 or 11, wherein the step (S21) of obtaining a 2D image comprises obtaining a 2D video, wherein obtaining the 2D video comprises capturing the oral cavity from a range of angles.

13. The method according to one of claims 10-12, wherein the step (S26) of transforming the obtained 2D image into an initial virtual 3D reconstruction of the oral cavity comprises a structure from motion procedure.

14. The method according to one of claims 10-13, wherein the further virtual 3D reconstruction is a morphable model and the step (S29) of transferring information comprised in the further virtual 3D reconstruction to the initial virtual 3D reconstruction comprises a step of applying the morphable model to the initial virtual 3D reconstruction, or wherein the further virtual 3D reconstruction is given by a Principal Component Analysis model and the step (S29) of transferring information comprised in the further virtual 3D reconstruction to the initial virtual 3D reconstruction comprises a step of applying the Principal Component Analysis model to the initial virtual 3D reconstruction.

15. A computer-implemented method for designing an intra-oral appliance (100), wherein the method comprises a step of using a virtual 3D reconstruction (1) of an oral cavity, wherein the virtual 3D reconstruction is obtained by the method according to one of claims 10-14.
